# EUROPÄISCHE PATENTSCHRIFT

(11) **EP 1 281 836 B1**
(45) Veröffentlichungstag und Bekanntmachung des Hinweises auf die Patenterteilung: **13.06.2007**
(21) Anmeldenummer: 01121224.8
(22) Anmeldetag: 05.09.2001
(51) Int. Cl.: F01D 3/00, F01D 3/04

(54) **Turbomaschine**
Turbomachine
Turbomachine

(30) Priorität: 03.08.2001 DE 10138056
(43) Veröffentlichungstag der Anmeldung: 05.02.2003
(73) Patentinhaber: ATLAS COPCO ENERGAS GMBH, 50999 Köln (DE)
(72) Erfinder: Bosen, Werner, Dipl.-Ing., 51143 Köln (DE)
(74) Vertreter: Albrecht, Rainer Harald

(56) Entgegenhaltungen:
- US-A- 4 170 435
- US-A- 5 248 239
- PATENT ABSTRACTS OF JAPAN vol. 009, no. 202 (M-405), 20. August 1985 (1985-08-20) -& JP 60 065201 A (HITACHI SEISAKUSHO KK), 15. April 1985 (1985-04-15)
- PATENT ABSTRACTS OF JAPAN vol. 012, no. 183 (M-703), 28. Mai 1988 (1988-05-28) -& JP 62 294701 A (HITACHI LTD), 22. Dezember 1987 (1987-12-22)

## Beschreibung

Die Erfindung betrifft eine Turbomaschine mit Gehäuse, Rotorwelle, einem an einem Wellenende der Rotorwelle fliegend angeordneten Laufrad einer zentripetal durchströmten Expansionsturbinenstufe, einem an dem anderen Wellenende der Rotorwelle fliegend angeordneten Laufrad einer radial durchströmten Verdichterstufe, einer Messeinrichtung zur direkten Erfassung eines Achsschubes, der in Wälzlager gelagerten Rotorwelle und mindestens zwei von einem Regler gesteuerten Druckregelventilen in Steuerleitungen. Über die Steuerleitungen ist eine gegen das Gehäuse abgedichtete Rotorkolbenfläche an der Rückseite eines der Laufräder mit den am Eintritt und Austritt der Stufen herrschenden Drücken beaufschlagbar, wobei der Regler nach Maßgabe des gemessenen Achsschubes entweder das Druckregelventil in der von dem höheren Druck beaufschlagten Steuerleitung oder das Druckregelventil in der unter dem niedrigeren Druck stehenden Steuerleitung betätigt, um einen außerhalb eines vorgegebenen Toleranzbereiches liegenden Achsschub durch Druckerhöhung oder Druckminderung an der Rotorkolbenfläche zu beseitigen.

Turbomaschinen werden im industriellen Einsatz bevorzugt auf einem hohen Druckniveau betrieben, wobei häufig der in Achsrichtung der Rotorwelle gerichtete Turbinenaustrittsdruck von dem ebenfalls axial gerichteten Verdichtereintrittsdruck stark abweicht. Durch den Differenzdruck zwischen der Verdichterstufe und der Expansionsturbinenstufe werden große Achsschubkräfte auf die mit hoher Drehzahl betriebene Rotorwelle ausgeübt. Der Achsschub kann zwar durch ein ausreichend dimensioniertes Axiallager komplett aufgenommen werden, doch erzeugen Axiallager, die zur Aufnahme hoher Betriebsachsschübe und Stöße ausgelegt sind, erhebliche Verlustleistungen. Die Verlustleistung der für den ungünstigsten Betriebsfall ausgelegten Axiallager kann 5 bis 10 % der Turbinenexpansionsleistung betragen.

Entsprechend vermindert sich die an der Verdichterstufe zur Verfügung stehende Antriebsleistung, was den Gesamtwirkungsgrad einer Anlage, z. B. einer Kälteanlage, in der die Turbomaschine zum Einsatz kommt, reduziert.

Vorteilhaft erscheint die Verwendung von Hochgenauigkeits-Schrägkugellagern, die auch bei sehr hohen Drehzahlen nur geringe Verluste erzeugen. Sie können in speziellen Ausführungen mit einem Drehzahl-Durchmesser-Produkt von bis zu 2,5 • 10⁶ mm/min betrieben werden. Dieser Wert reicht aus, um beispielsweise einen Kälte-Turboexpander mit einem Expansionsdruckverhältnis p_{EIN/}p_{AUS} = 10 an der Expansionsturbinenstufe zu betreiben. Hochgenauigkeits-Wälzlager erreichen allerdings nur dann eine akzeptable Lebensdauer, wenn die Wälzlager im Dauerbetrieb geringen Kräften, insbesondere geringen Axialkräften, ausgesetzt sind. Die zulässigen Werte reichen im Regelfall nicht aus, um die beim Betrieb eines Turboexpanders auftretenden Achsschübe und Stöße aufzunehmen.

Eine Turbomaschine mit den eingangs beschriebenen Merkmalen ist aus der Druckschrift US 5,248,239 bekannt. Bei der bekannten Vorrichtung erfolgt die Aufnahme des Axialschubes durch ein berührungsloses magnetisches Axiallager, während die Lagerung der Welle über magnetische Radiallager sowie zusätzlich vorgesehene Wälzlager erfolgt. Der vorliegende Achsschub wird indirekt über eine axiale Verschiebung des Rotors mittels Positionssensoren erfasst.

Der Erfindung liegt die Aufgabe zugrunde, für einen Turboexpander eine Achsschubkompensation vorzusehen, die automatisch regelbar ist und sich selbsttätig an unterschiedliche Betriebsbedingungen des Turboexpanders anpasst.

Ausgehend von einer Turbomaschine mit den eingangs beschriebenen Merkmalen wird die Aufgabe erfindungsgemäß dadurch gelöst, dass die Messeinrichtung einen ringförmigen Kraftaufnehmer mit Dehnungsmessstreifen aufweist, der zwischen einem von einem Achsschub der Rotorwelle belasteten gehäuseseitigen äußeren Lagerring eines Wälzlagers und einer Anschlagfläche des Gehäuses angeordnet ist. Der Dehnungsmessstreifen aufweisende Kraftaufnehmer misst zeitunabhängig auch unveränderte Achsschübe, wie etwa eine axiale Lagervorspannkraft im Stillstand, ohne Druckbeaufschlagung der Turbomaschine.

Die Rotorkolbenfläche kann beispielsweise an der Rückseite des Verdichterlaufrades vorgesehen sein. Über die Steuerleitungen ist die mit dem am Eintritt in die Verdichterstufe herrschenden Druck und dem Druck am Austritt der Verdichterstufe beaufschlagbar, wobei der Regler nach Maßgabe des gemessenen Achsschubes entweder das Druckregelventil in der von dem Verdichtereintrittsdruck beaufschlagten Steuerleitung oder das Druckregelventil in der unter dem Verdichteraustrittsdruck stehenden Steuerleitung betätigt. Im Rahmen der Erfindung liegt aber auch eine Ausführung gemäß Anspruch 3, bei der die Rotorkolbenfläche an der Rückseite des Laufrades der Expansionsturbinenstufe vorgesehen ist.

Für die Wälzlagerung der Rotorwelle wird ein zulässiger Achsschub festgelegt. Beim Betrieb der Turbomaschine vergleicht der Regler die von der Messeinrichtung aufgenommenen Achsschubmesswerte mit dem vorgegebenen Sollwertbereich. Liegt der gemessene Achsschub außerhalb des Sollwertbereiches, wird eines der beiden Druckregelventile zum Zwecke der Korrektur des Achsschubes angesteuert. Durch die Druckregelventile kann der Druck an der Rotorkolbenfläche feinfühlig geregelt werden. Je nach dem, in welcher Richtung der Achsschub korrigiert werden muss, wird der Druck an der Rotorkolbenfläche erhöht oder vermindert.

In weiterer Ausgestaltung lehrt die Erfindung, dass Zusatzsteuerleitungen mit jeweils einem Ventil vorgesehen sind, wobei über die Zusatzsteuerleitungen eine weitere, gegen das Gehäuse abgedichtete Rotorkolbenfläche an der Rückseite des anderen Laufrades mit den am Eintritt dieser Stufe herrschenden Druck und dem Druck am Austritt dieser Stufe beaufschlagbar ist.

Die Ventile der Zusatzsteuerleitungen können als Druckregelventile ausgebildet sein, die ebenfalls von dem Regler angesteuert werden. Die Steuerung der Druckregelventile in den Steuerleitungen sowie den Zusatzsteuerleitungen erfolgt dabei so, dass die Druckänderungen an den Rotorkolbenflächen des Verdichterlaufrades und des Turbinenlaufrades sich so ergänzen, dass die Kompensationskraft für die Achsschubkompensation verstärkt wird. Insofern sind die Druckregelventile beispielsweise so geschaltet, dass eine Erhöhung des Druckes an der Rotorkolbenfläche der Verdichterstufe mit einer Druckminderung an der Rotorkolbenfläche des Turbinenlaufrades kombiniert ist. Entsprechend wird eine Druckminderung an der Rotorkolbenfläche des Verdichterlaufrades mit einer Druckerhöhung einer Rotorkolbenfläche des Turbinenlaufrades kombiniert. Bei der erfindungsgemäßen Ausgestaltung können sehr große Kompensationskräfte aufgebracht und präzise geregelt werden, so dass der Achsschub der Rotorwelle in einem engen, für Hochgenauigkeitswälzlager zulässigen Sollwertbereich bleibt.

Im Rahmen der Erfindung liegt es auch, dass die Ventile der Zusatzsteuerleitungen schnell öffnende Schaltventile, z. B. Magnetventile, sind. Die Verwendung von schnell öffnenden Schaltventilen bietet sich an, um stoßartige Achsschubänderungen schnell zu korrigieren. Dabei wird die zusätzliche Rotorkolbenfläche schnell mit jeweils dem niedrigern oder höheren Druck in voller Stärke beaufschlagt.

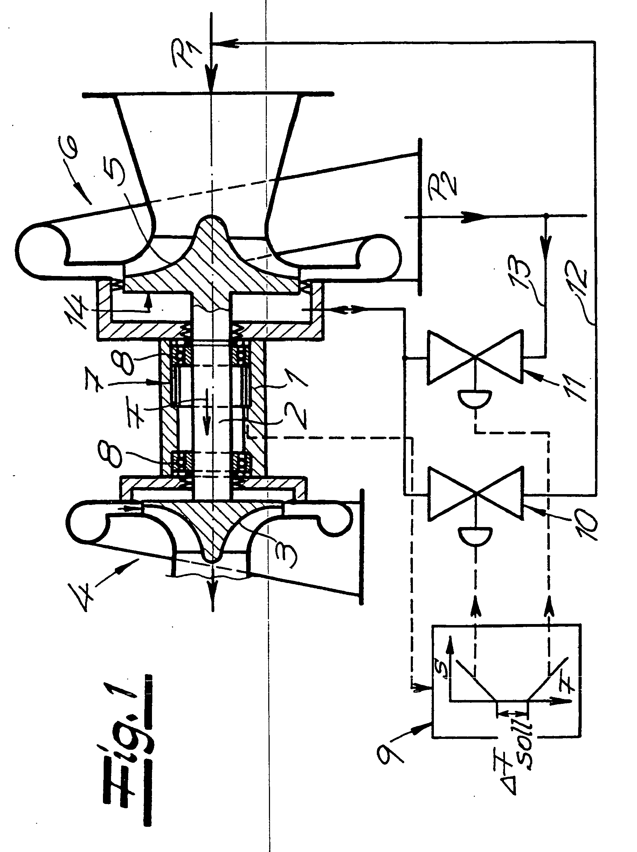

Im Folgenden wird die Erfindung anhand einer lediglich ein Ausführungsbeispiel darstellenden Zeichnung erläutert. Es zeigen schematisch
- Fig. 1: einen Längsschnitt durch eine Turbomaschine mit einer erfindungsgemäß ausgebildeten Vorrichtung zur Achsschubkompensation,
- Fig. 2 und 3: weitere Ausgestaltungen der erfindungsgemäßen Vorrichtung.

Die in den Figuren dargestellte Turbomaschine besteht in ihrem grundsätzlichen Aufbau aus einem Gehäuse 1 und einem wälzgelagerten Rotor mit einer Rotorwelle 2, einem an einem Wellenende der Rotorwelle 2 fliegend angeordneten Laufrad 3 einer zentripetal durchströmten Expansionsturbinenstufe 4 sowie einem an dem anderen Wellenende der Rotorwelle 2 fliegend angeordneten Laufrad 5 einer radial durchströmten Verdichterstufe 6. Die Turbomaschine ist mit einer Messeinrichtung 7 zur direkten Erfassung eines Achsschubes der in Wälzlagern 8 gelagerten Rotorwelle 2 ausgerüstet und weist mindestens zwei von einem Regler 9 gesteuerte Druckregelventile 10, 11 auf. Ein Druckregelventil 10 ist in einer Steuerleitung 12 angeordnet, die an den Eintritt der Verdichterstufe 6 angeschlossen ist. Das andere Druckregelventil 11 ist in einer Steuerleitung 13 angeordnet, die mit der Austrittsseite der Verdichterstufe 6 verbunden ist.

Über die Steuerleitungen 12, 13 ist eine gegen das Gehäuse 1 abgedichtete Rotorkolbenfläche 14 an der Rückseite des Verdichterlaufrades 5 mit dem am Eintritt in die Verdichterstufe herrschenden niedrigerem Druck p₁ und dem höheren Druck p₂ am Austritt der Verdichterstufe 6 mehr oder weniger beaufschlagbar. Der Regler 9 betätigt nach Maßgabe des gemessenen Achsschubes entweder das Druckregelventil 10 in der von dem Verdichtereintrittsdruck p₁ beaufschlagten Steuerleitung 12 oder das Druckregelventil 11 in der unter dem Verdichteraustrittsdruck p₂ stehenden Steuerleitung 13, um einen außerhalb eines vorgegebenen Toleranzbereiches liegenden Achsschub durch Druckerhöhung oder Druckminderung an der Rotorkolbenfläche 14 zu beseitigen. Den Figuren entnimmt man, dass die Steuerleitungen 12, 13 an der Rückseite des Verdichterlaufrades 5 an die Verdichterstufe 6 angeschlossen sind und dass die Rotorkolbenfläche 14 im Ausführungsbeispiel von einer gegen das Gehäuse 1 abgedichteten Rückenfläche des Verdichterlaufrades 6 gebildet wird.

Die Messeinrichtung 7 weist einen ringförmigen Kraftaufnehmer auf, der zwischen einem von einem Achsschub der Rotorwelle 2 belasteten gehäuseseitigen äußeren Lagerring eines Wälzlagers 8 und einer Anschlagfläche des Gehäuses 1 angeordnet ist und mit Dehnungsmessstreifen arbeitet. Liegt der von der Messeinrichtung 7 erfasste Kraftmesswert F außerhalb des vorgegebenen Sollwertbereiches ΔF, so wird eines der beiden Druckregelventile 10, 11 angesteuert. Liegt z. B. der Messwert F unterhalb ΔFsoll wird das in der von dem Verdichtereintrittsdruck p₁ beaufschlagte Druckregelventil 10 angesteuert und der Druck an der Rotorkolbenfläche 14 so weit reduziert, bis der Messwert wieder im vorgegebenen Sollwertbereich liegt. Steigt der Messwert F oberhalb ΔFsoll an, wird zunächst das Druckregelventil 10 zurückgesteuert, bis es wieder geschlossen ist. Erst dann wird, falls der Messwert F immer noch oberhalb ΔFsoll liegt, das andere, in der von dem Austrittsdruck p₂ beaufschlagten Steuerleitung angeordnete Druckregelventil 11 betätigt und der Druck an der Rotorkolbenfläche 14 so weit erhöht, bis der Messwert wieder in dem vorgegebenen Sollwertbereich liegt.

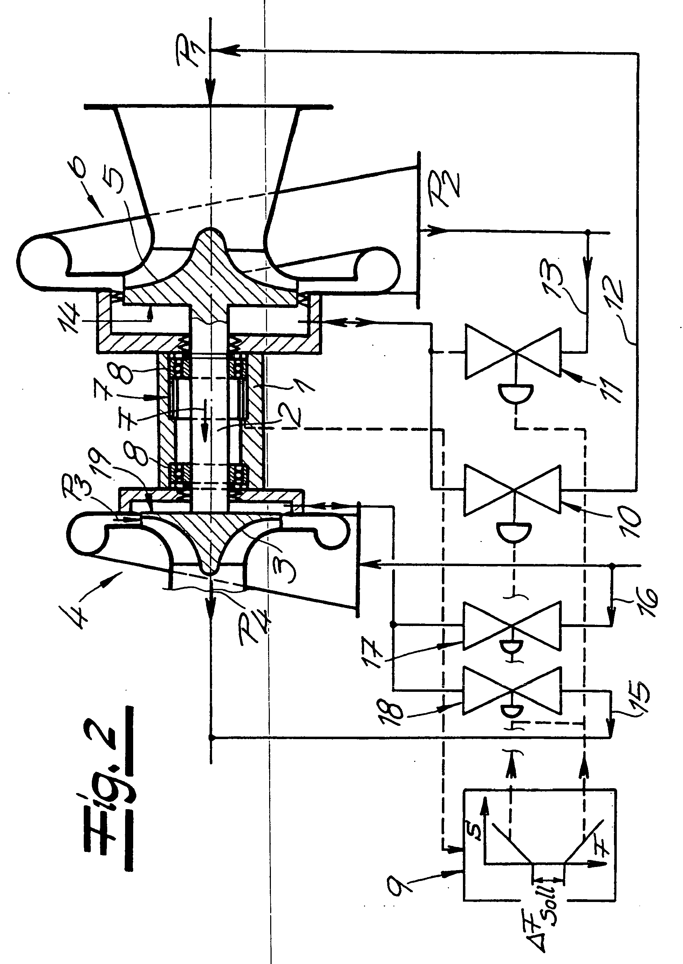

Bei der in Fig. 2 dargestellten Ausführung sind Zusatzsteuerleitungen 15, 16 vorgesehen, die an der Rückseite des Turbinenlaufrades 3 an die Expansionsturbinenstufe 4 angeschlossen sind und jeweils ein von dem Regler 9 gesteuertes Druckregelventil 17, 18 aufweisen. Über die Zusatzsteuerleitungen ist eine weitere, gegen das Gehäuse 1 abgedichtete Rotorkolbenfläche 19 an der Rückseite des Laufrades 3 der Expansionsturbinenstufe mit dem am Eintritt der Expansionsturbinenstufe 4 herrschenden Turbinenzuführdruck p₃ und dem Turbinenaustrittsdruck p₄ am Ausgang der Expansionsturbinenstufe 4 beaufschlagbar. Die zusätzliche Rotorkolbenfläche 19 wird von einer gegen das Gehäuse 1 abgedichteten Rückenfläche des Turbinenlaufrades 3 gebildet. Die in Fig. 2 dargestellte Ausführung kommt in Betracht, wenn sehr große Kompensationskräfte zum Ausgleich des Achsschubes erforderlich sind. Die Druckregelventile 10, 11 in den Steuerleitungen 12, 13 und die Druckregelventile 17, 18 in den Zusatzsteuerleitungen 15, 16 sind dabei paarweise so geschaltet, dass die Druckänderungen an den Rotorsteuerflächen 14, 19 gleichgerichtete Wirkungen entfalten. So wird beispielsweise eine Druckerhöhung an der Rotorkolbenfläche 14 des Verdichterlaufrades 5 mit einer Druckminderung an der Rotorsteuerfläche 19 des Turbinenlaufrades 3 kombiniert. Folglich werden die Druckregelventile 11 und 18 angesteuert.

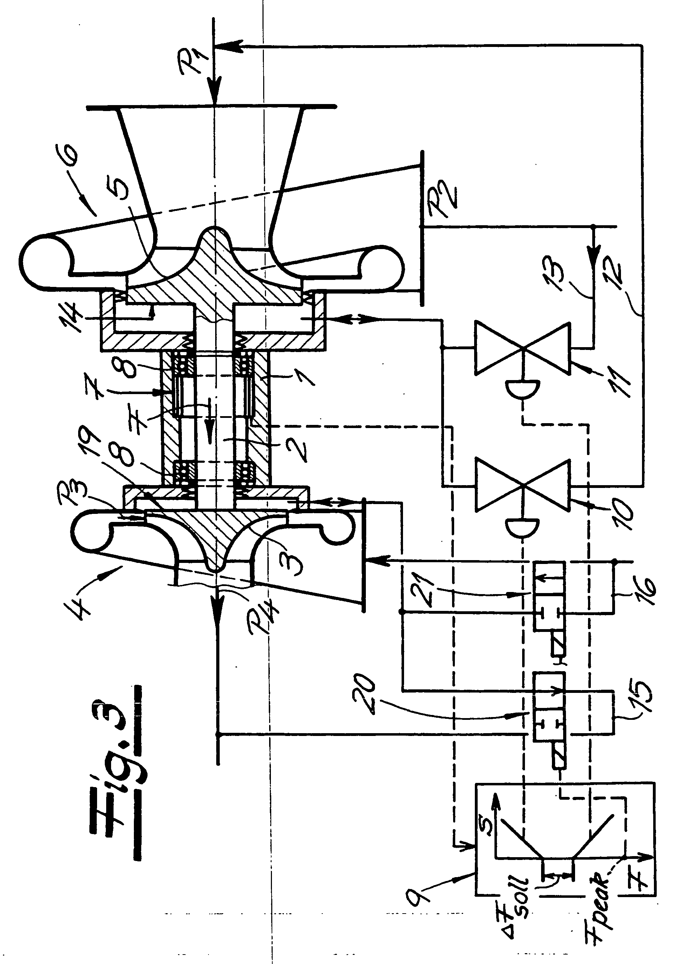

Bei der in Fig. 3 dargestellten Ausführung sind ebenfalls Zusatzsteuerleitungen 15, 16 mit jeweils einem Ventil 20, 21 vorgesehen. Die Ventile 20, 21 sind schnell öffnende Schaltventile, beispielsweise Magnetventile. Bei stoßartigen Achsschubänderungen wird je nach Achsschubrichtung das eine oder andere Schaltventil betätigt und die zugeordnete Rotorkolbenfläche 19 an der Rückseite des Turbinenlaufrades 3 mit einem niedrigeren oder höheren Druck p₄, p₃ in voller Stärke beaufschlagt. Es versteht sich, dass die in Fig. 2 und 3 beschriebenen Maßnahmen auch miteinander kombiniert werden können.

Die Rotorwelle 2 ist in den Ausführungsbeispielen in Hochgenauigkeits-Schrägkugellagern gelagert. Diese Lager können mit einem Drehzahl-Durchmesser-Produkt von bis zu 2,5 · 10⁶ mm/min betrieben werden.

## Patentansprüche

1. Turbomaschine mit
Gehäuse (1),
Rotorwelle (2),
einem an einem Wellenende der Rotorwelle (2) fliegend angeordneten Laufrad (3) einer zentripetal durchströmten Expansionsturbinenstufe (4),
einem an dem anderen Wellenende der Rotorwelle (2) fliegend angeordneten Laufrad (5) einer radial durchströmten Verdichterstufe (6),
einer Messeinrichtung (7) zur direkten Erfassung eines Achsschubes der in Wälzlagern (8) gelagerten Rotorwelle (2) und
mindestens zwei von einem Regler (9) gesteuerten Druckregelventilen (10, 11) in Steuerleitungen,
wobei über die Steuerleitungen eine gegen das Gehäuse (1) abgedichtete Rotorkolbenfläche (14 oder 19) an der Rückseite eines der Laufräder (5 oder 3) mit den am Eintritt und Austritt der Stufen herrschenden Drücken (p₁, p₂ bzw. p₃, p₄) beaufschlagbar ist und wobei der Regler (9) nach Maßgabe des gemessenen Achsschubes entweder das Druckregelventil (11) in der von dem höheren Druck beaufschlagten Steuerleitung oder das Druckregelventil(10) in der unter dem niedrigeren Druck stehenden Steuerleitung betätigt, um einen außerhalb eines vorgegebenen Toleranzbereiches liegenden Achsschub durch Druckerhöhung oder Druckminderung an der Rotorkolbenfläche (14) zu beseitigen, **dadurch gekennzeichnet, dass** die Messeinrichtung (7) einen ringförmigen Kraftaufnehmer mit Dehnungsmessstreifen aufweist, der zwischen einem von einem Achsschub der Rotorwelle (2) belasteten gehäuseseitigen äußeren Lagerring eines Wälzlagers (8) und einer Anschlagfläche des Gehäuses (1) angeordnet ist.

2. Turbomaschine nach Anspruch 1, **dadurch gekennzeichnet, dass** die Rotorkolbenfläche (14) an der Rückseite des Verdichterlaufrades (5) über die Steuerleitungen (11, 12) mit dem am Eintritt in die Verdichterstufe herrschenden Druck (p₁) und dem Druck (p₂) am Austritt der Verdichterstufe (6) beaufschlagbar ist und dass der Regler (9) nach Maßgabe des gemessenen Achsschubes entweder das Druckregelventil (10) in der von dem Verdichtereintrittsdruck (p₁) beaufschlagte Steuerleitung (12) oder das Druckregelventil (11) in der unter dem Verdichteraustrittsdruck (p₂) stehenden Steuerleitung (13) betätigt.

3. Turbomaschine nach Anspruch 1, **dadurch gekennzeichnet, dass** die Rotorkolbenfläche (19) an der Rückseite des Laufrades (3) der Expansionsturbinenstufe (4) über die Steuerleitungen (16, 15) mit dem am Eintritt in die Expansionsturbinenstufe (4) herrschenden Druck (p₃) und dem Druck (p₄) am Austritt der Expansionsturbinenstufe (4) beaufschlagbar ist und dass der Regler (9) nach Maßgabe des gemessenen Achsschubes entweder das Druckregelventil (17) in der von dem Eintrittsdruck (p₃) beaufschlagte Steuerleitung (16) oder das Druckregelventil (18) in der unter dem Austrittsdruck (p₄) stehenden Steuerleitung (15) beaufschlagt.

4. Turbomaschine nach Anspruch 1, **dadurch gekennzeichnet, dass** Zusatzsteuerleitungen mit jeweils einem Ventil vorgesehen sind, wobei über die Zusatzsteuerleitungen eine weitere, gegen das Gehäuse (1) abgedichtete Rotorkolbenfläche(19) an der Rückseite des anderen Laufrades (3) mit den am Eintritt dieser Stufe (4) herrschenden Druck (p₃) und dem Druck (p₄) am Austritt dieser Stufe (6) beaufschlagbar ist.

5. Turbomaschine nach Anspruch 4, **dadurch gekennzeichnet, dass** die Ventile der Zusatzsteuerleitungen von dem Regler (9) gesteuerte Druckregelventile (17, 18) sind.

6. Turbomaschine nach Anspruch 4, **dadurch gekennzeichnet, dass** die Ventile der Zusatzsteuerleitungen schnell öffnende Schaltventile (20, 21) sind.

7. Turbomaschine nach einem der Ansprüche 1 bis 6, **dadurch gekennzeichnet, dass** die Rotorwelle (2) in Hochgenauigkeits-Schrägkugellagern gelagert ist.

## Claims

1. A turbo-machine comprising
a housing (1),
a rotor shaft (2),
a rotor disk (3) of a centripetal-flow expansion turbine stage (4) overhung on an end of the rotor shaft (2),
a rotor disk (5) of a radial-flow compressor stage (6) overhung on the other end of the rotor shaft (2), a measuring device (7) for direct determination of an axial thrust of the rotor shaft (2) mounted in roll bearings (8) and
at least two pressure control valves (10, 11) controlled by a regulator (9) in control lines,
wherein a rotor piston surface (14 or 19) on the rear side of one of the rotor disks (5 or 3) and which is sealed with respect to the housing (1) is able to be acted upon via the control lines by the pressures (p₁, p₂ or p₃, p₄) prevailing on the inlet and outlet of the stages, and wherein the regulator (9) actuates in response to the measured axial thrust either the pressure control valve (11) in the control line acted upon by the higher pressure, or the pressure control valve (10) in the control line under the lower pressure, in order to eliminate an axial thrust lying outside a preset tolerance range by raising or reducing the pressure on the rotor piston surface (14), **characterized in that** the measuring device (7) has a ring-shaped force absorber with expansion measuring strips, which is arranged between an outer bearing ring of a roller bearing (8) on the housing side, which is stressed by an axial thrust of the rotor shaft (2), and a stop surface of the housing (1).

2. The turbo-machine according to Claim 1, **characterized in that** the rotor piston surface (14) on the rear side of the compressor rotor disk (5) is able to be acted upon via the control lines (11, 12) by the pressure (p₁) prevailing on the inlet into the compressor stage and by the pressure (P₂) on the outlet of the compressor stage (6), and that the regulator (9) actuates in response to the measured axial thrust either the pressure control valve (10) in the control line (12) acted by the compressor inlet pressure (p₁), or the pressure control valve (11) in the control line (13) under the compressor outlet pressure (p₂) .

3. The turbo-machine according to Claim 1, **characterized in that** the rotor piston surface (19) on the rear side of the rotor disk (3) of the expansion turbine stage (4) is able to be acted upon via the control lines (16, 15) by the pressure (p₃) prevailing on the inlet into the expansion turbine stage (4) and the pressure (p₄) on the outlet of the expansion turbine stage (4), and that the regulator (9) actuates in response to the measured axial thrust either the pressure control valve (17) in the control line (16) acted upon by the inlet pressure (p₃), or the pressure control valve (18) in the control line (15) under the outlet pressure (p₄).

4. The turbo-machine according to Claim 1, **characterized in that** additional control lines are respectively provided with a valve, wherein via the additional control lines a further rotor piston surface (19), sealed with respect to the housing (1), on the rear side of the other rotor disk (3), is able to be acted upon by the pressure (p₃) prevailing on the inlet of this stage (4) and by the pressure (p₄) on the outlet of this stage (6).

5. The turbo-machine according to Claim 4, **characterized in that** the valves of the additional control lines are pressure control valves (17, 18) controlled by the regulator (9).

6. The turbo-machine according to Claim 4, **characterized in that** the valves of the additional control lines are rapidly opening switching valves (20, 21).

7. The turbo-machine according to any of Claims 1 to 6, **characterized in that** the rotor shaft (2) is mounted in high-precision inclined ball bearings.

## Revendications

1. Turbomachine comprenant :
- un boîtier (1),
- un arbre de rotor (2),
- un rotor (3) monté fou à une extrémité de l'arbre de rotor (2) d'un étage de turbine de détente (4) traversé de façon centripète,
- un rotor (5) monté fou à l'autre extrémité de l'arbre de rotor (2) d'un étage de compresseur (6) traversé radialement,
- un dispositif de mesure (7) pour saisir directement une poussée axiale de l'arbre de rotor (2) logé dans des paliers à rouleaux (8), et
- au moins deux soupapes de régulation de pression (10, 11) commandées par un régulateur (9) dans des conduites de commande,
dans laquelle les conduites de commande chargent une surface de piston de rotor (14 ou 19) étanche par rapport au boîtier (1) sur la face arrière d'un rotors (5 ou 3) avec les pressions (p₁, p₂ ou p₃, p₄) régnant à l'entrée et à la sortie des étages, et le régulateur (9) actionne, en fonction de la poussée axiale mesurée, soit la soupape de régulation de pression (11) dans la conduite de commande sollicitée par la plus haute pression, soit la soupape de régulation de pression (10) dans la conduite de commande avec la plus basse pression pour ainsi supprimer une poussée axiale située en dehors d'une plage de tolérances pré-définie par une augmentation ou une réduction de pression sur la surface de piston de rotor (14),
**caractérisée en ce que**
le dispositif de mesure (7) présente une prise de force annulaire munie d'une jauge extensiométrique, disposée entre une bague de palier d'un palier à rouleaux (8) côté boîtier sollicitée par une poussée axiale de l'arbre de rotor (2) et une surface de butée du boîtier (1).

2. Turbomachine selon la revendication 1,
**caractérisée en ce que**
sur la face arrière du rotor de compresseur (5) les conduites de commande (11, 12) chargent la surface de piston de rotor (14) avec la pression (p₁) régnant à l'entrée de l'étage de compresseur et avec la pression (p₂) régnant à la sortie de l'étage de compresseur (6), et le régulateur (9) actionne, en fonction de la poussée axiale mesurée, soit la soupape de régulation de pression (10) dans la conduite de commande (12) sollicitée par la pression d'entrée de compresseur (p₁), soit la soupape de régulation de pression (11) dans la conduite de commande (13) sous pression de sortie de compresseur (p₂).

3. Turbomachine selon la revendication 1,
**caractérisée en ce que**
sur la face arrière du rotor (3) de l'étage de turbine d'expansion (4), les conduites de commande (16, 15) chargent la surface de piston de rotor (19) avec la pression (p₃) régnant à l'entrée de l'étage de turbine de détente (4) et la pression (p₄) régnant à la sortie de l'étage de turbine de détente (4), et le régulateur (9) actionne, en fonction de la poussée axiale mesurée, soit la soupape de régulation de pression (17) dans la conduite de commande (16) sollicitée par la pression d'entrée (p₃), soit la soupape de régulation de pression (18) dans la conduite de commande (16) sous pression de sortie (p₄).

4. Turbomachine selon la revendication 1,
**caractérisée en ce que**
des conduites de commande supplémentaires munies chacune d'une soupape sont prévues, et les conduites de commande supplémentaires chargent une autre surface de piston de rotor (19) étanche par rapport au boîtier (1) sur la face arrière de l'autre rotor (3), avec la pression (p₃) régnant à l'entrée de cet étage (4) et la pression (p₄) régnant à la sortie de cet étage (6).

5. Turbomachine selon la revendication 4,
**caractérisée en ce que**
les soupapes des conduites de commande supplémentaires sont des soupapes de régulation de pression (17, 18) commandées par le régulateur (9).

6. Turbomachine selon la revendication 4,
**caractérisée en ce que**
les soupapes des conduites de commande supplémentaires sont des soupapes de commutation (20, 21) à ouverture rapide.

7. Turbomachine selon l'une quelconque des revendications 1 à 6,
**caractérisée en ce que**
l'arbre de rotor (2) est logé dans des roulements à billes à portée oblique haute précision.
